# EUROPÄISCHE PATENTANMELDUNG

(11) **EP 1 055 985 A2**
(43) Veröffentlichungstag der Anmeldung: **29.11.2000**
(21) Anmeldenummer: 00109825.0
(22) Anmeldetag: 09.05.2000
(51) Int. Cl.: G05D 11/13, C21D 1/76

(54) **Verfahren und Vorrichtung zum Überwachen und Regeln einer Gaszusammensetzung**

(30) Priorität: 25.05.1999 DE 19923980
(71) Anmelder: Linde Technische Gase GmbH, 82049 Höllriegelskreuth (DE)
(72) Erfinder: Jurmann, Alexander, Dipl.-Ing., D-83666 Waakirchen (DE)
(74) Vertreter: Zahn, Christoph

(57) **Zusammenfassung**

Verfahren und Vorrichtung zum Überwachen und Regeln einer Gaszusammensetzung, insbeson-dere einer als Schutz- und/oder Wärmebehandlungsgas verwendeten Gaszusam-mensetzung, bestehend aus wenigstens einem Kohlenwasserstoff und Sauerstoff und/oder einem Sauerstoff-reichen Gasgemisch, die vor ihrer Verwendung gemischt werden.

Erfindungsgemäß wird die Gaszusammensetzung (5) nach ihrer Vermischung (3) und vor ihrer thermischen Umsetzung (6) analysiert (7, 8) und entsprechend der Analyse und der gewünschten Zusammensetzung des Gases wird die Zufuhr des oder der Kohlenwasserstoffe (1) und/oder die Zufuhr des Sauerstoffes und/oder des Sauerstoffreichen Gasgemisches (2) und/oder des Sauerstoff-haltigen Gasgemisches (2) nachgeregelt (7, 9).

Die Analyse (7, 8) der Gaszusammensetzung kann beispielsweise mittels wenigstens eines Infrarot-Sensors und/oder eines Sensors, der die paramagnetischen Eigenschaften des Gases erfaßt, erfolgen.

## Beschreibung

Die Erfindung betrifft ein Verfahren zum Überwachen und Regeln einer Gaszusammensetzung, insbesondere einer als Schutz- und/oder Wärmebehandlungsgas verwendeten Gaszusammensetzung, bestehend aus wenigstens einem Kohlenwasserstoff und/oder Sauerstoff und/oder einem Sauerstoff-reichen Gasgemisch und/oder einem Sauerstoff-haltigen Gasgemisch, die vor ihrer Verwendung gemischt werden.

Ferner betrifft die Erfindung eine Vorrichtung zum Überwachen und Regeln einer Gaszusammensetzung, insbesondere einer als Schutz- und/oder Wärmebehandlungsgas verwendeten Gaszusammensetzung, bei der wenigstens ein Kohlenwasserstoff und/oder Sauerstoff und/oder ein Sauerstoff-reiches Gasgemisch und/oder ein Sauerstoff-haltiges Gasgemisch vor ihrer Verwendung in wenigstens einer Mischvorrichtung zusammengeführt werden.

Unter dem Begriff "Sauerstoff-reiches Gasgemisch" sei hierbei ein Gemisch zu verstehen, bei dem der Oxidant einen höheren O₂-Gehalt als die Luft aufweist. Andere Gemisch fallen unter den Begriff "Sauerstoff-haltiges Gasgemisch".

Schutzgaserzeugungs- und Wärmebehandlungsanlagen werden gemäß dem Stand der Technik überwiegend mit sog. Luftbrennem beheizt bzw. betrieben. Für die Erzeugung des Schutz- und/oder Wärmebehandlungsgases findet größtenteils eine endotherme Umsetzung von Kohlenwasserstoffen mit geeigneten Oxidanten - wie beispielsweise Luft, Sauerstoff, einem Sauerstoff-reichen und/oder Sauerstoff-haltigen Gasgemisch -, gegebenenfalls in Anwesenheit eines Katalysators, Verwendung.

Bei dem sog. Generator-Endogasverfahren zum Aufkohlen, kohlungsneutralen und in bestimmten Fällen auch entkohlenden Wärmebehandeln von Gut - wie es beispielsweise aus der DE-OS 44 27 507 bekannt ist - wird das benötigte Behandlungsgas durch teilweise Oxidation von Erdgas, Methan oder Propan mit Luft bei einer Temperatur von ca. 1000°C erzeugt.

Im Regelfall wird ein geringfügiger stöchiometrischer Überschuß des Oxidanten gefordert, um eine Kohlenstoffbildung in der Spaltretorte zu vermeiden. Ziel ist es jedoch immer, möglichst am stöchiometrischen Punkt umzusetzen bzw. das Verfahren an diesem zu betreiben.

Die Erzeugung von Reaktions- bzw. Wärmebehandlungsgasen kann sowohl extern - wie im Falle des Generator-Endogasverfahrens - als auch in den Wärmebehandlungsanlagen, wie beispielsweise den bekannten Carbocat®- oder Carboquick®-K-Prozessen, integriert erfolgen.

Die Einstellung des Gemisches Kohlenwasserstoff(e)/Oxidant erfolgt üblicherweise von Hand. Im Falle des Generator-Endogasverfahrens erfolgt nach der Analyse des gespaltenen und abgekühlten Gases eine Feineinstellung. Hierbei können die Partialdrücke des Sauerstoffs, Kohlendioxids sowie Wassers durch Änderung des Eingangsmischungsverhältnisses eingestellt werden. Sind derartige Spaltsysteme in die Ofenanlage integriert, ist es erforderlich, daß zum Zwecke der Gasanalyse gespaltenes Gas aus der Spalteinrichtung abgesaugt wird. Aus diesem Grund erfolgt die Analyse üblicherweise diskontinuierlich.

Im Falle des Generator-Endogasverfahrens wird nach erfolgter Analyse über Durchflußmesser das gewünschte Verhältnis von Kohlenwasserstoff(en) zu Oxidant korrigiert. Es ist von großer Bedeutung, daß bereits von Anfang an das richtige Mischungsverhältnis aus Kohlenwasserstoff(en) und Oxidant über die Spalteinrichtung geleitet wird, damit Schäden an dieser vermieden werden. Des weiteren ist darauf zu achten, daß das optimale Mischungsverhältnis über die Zeit konstant gehalten wird.

Im Regelfall erfolgt jedoch keine Überwachung des Eingangsverhältnisses - sondern nur der Durchflußmengen der einzelnen Komponenten -, weshalb sich aufgrund von Änderungen der Vordrücke, Verschmutzungen der Durchflußmeßgeräte, Änderungen des Gegendruckes der Retorte, etc. unerwünschte und schädigende Effekte - wie beispielsweise eine Veränderung des Eingangsmischungsverhältnisses -, die oftmals eine Störung der Anlage zur Folge haben, ergeben können.

Aufgabe der vorliegenden Erfindung ist es, ein Verfahren sowie eine Vorrichtung zum automatischen Überwachen und Regeln einer Eingangsgaszusammensetzung anzugeben, mittels dem bzw. mittels der die genannten Nachteile der zum Stand der Technik zählenden Verfahren vermieden werden können.

Dies wird entsprechend dem erfindungsgemäßen Verfahren zum Überwachen und Regeln einer Gaszusammensetzung dadurch erreicht, daß die Gaszusammensetzung nach ihrer Vermischung und vor ihrer thermischen Umsetzung analysiert und entsprechend der Analyse und der gewünschten Zusammensetzung des Gases die Zufuhr des oder der Kohlenwasserstoffe und/oder die Zufuhr des Sauerstoffes und/oder des Sauerstoff-reichen Gasgemisches nachgeregelt wird.

Die erfindungsgemäße Vorrichtung zum Überwachen und Regeln einer Gaszusammensetzung ist durch eine Analysevorrichtung, die die Gaszusammensetzung nach ihrer Vermischung und vor ihrer Verwendung erfaßt, und Mittel zum Regeln der Zufuhr des oder der Kohlenwasserstoffe und/oder der Zufuhr des Sauerstoffes und/oder des Sauerstoff-reichen Gasgemisches und/oder des Sauerstoff-haltigen Gasgemisches gekennzeichnet.

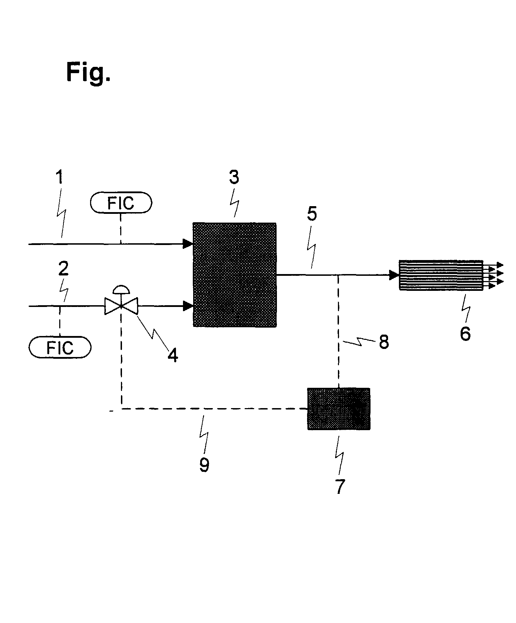

Das erfindungsgemäße Verfahren, die erfindungsgemäße Vorrichtung sowie weitere Ausgestaltungen des- bzw. derselben, die Gegenstände von Unteransprüchen darstellen, seien im folgenden anhand des in der Figur dargestellten Ausführungsbeispieles näher erläutert.

Die Figur zeigt eine Dosier- oder Mischeinrichtung 3, der über Leitung 1 ein Kohlenwasserstoffstrom und über Leitung 2 ein Oxidant, wie beispielsweise Luft, Sauerstoff, ein Sauerstoff-reicher und/oder ein Sauerstoff-haltiger Gasstrom, zugeführt werden. Zumindest die Leitung 1 weist eine Durchflußmeßvorrichtung (FIC) auf. In der Leitung 2, der ebenfalls eine Durchflußmeßvorrichtung (FIC) zugeordnet sein kann, ist eine Regelvorrichtung, vorzugsweise ein Regelventil 4, vorgesehen, auf die bzw. auf das im folgenden noch näher eingegangen werden wird.

Das in der Dosier- bzw. Mischeinrichtung 3 erzeugte Gasgemisch wird über Leitung 5 abgezogen und beispielsweise einer Spalteinrichtung 6 zugeführt. Die in der Figur dargestellte Spalteinrichtung 6 kann hierbei entweder als ein externer Generator oder direkt in eine Wärmebehandlungsanlage integriert - sog. In-Situ-Spalteinrichtung - ausgebildet sein.

Mittels geeigneter physikalischer und/oder chemischer Sensoren - die in der Figur nicht dargestellt sind - wird die Gaszusammensetzung detektiert und in einer entsprechenden Analysevorrichtung 7, die über die gestrichelt gezeichnete Leitung 8 mit dem in der Leitung 5 vorzusehenden Sensor verbunden ist, ausgewertet.

Entsprechend einer vorteilhaften Ausgestaltung des erfindungsgemäßen Verfahrens sowie der erfindungsgemäßen Vorrichtung eignen sich hierfür insbesondere Infrarot-Sensoren und/oder Sensoren, die die paramagnetischen Eigenschaften der Gaszusammensetzung erfassen.

Die Gasanalyse kann gemäß einer weiteren Ausgestaltung des erfindungsgemäßen Verfahrens kontinuierlich oder diskontinuierlich erfolgen. Im Regelfall wird eine kontinuierliche Analyse des Eingangsgases erfolgen, da nur so auch auf kurzfristige Änderungen in den (Betriebs)Parametern reagiert werden kann und Beschädigungen an der Anlage vermieden werden können.

Im Falle des bereits erwähnten Generator-Endogasverfahrens kann durch eine kontinuierliche Analyse des in der Spalteinrichtung 6 zu spaltenden Gasgemisches eine einfache und dennoch sichere Überwachung der Generatoren realisiert werden. Gleiches gilt für die erwähnten In-Situ-Spalteinrichtungen.

Sobald Änderungen der obengenannten Art auftreten, kann eine sofortige Nachregelung des gewünschten Mischverhältnisses - unabhängig von Druckschwankungen oder sonstigen Störungen im Versorgungssystem - erfolgen. Zu diesem Zweck kann beispielsweise das bereits erwähnte Regelventil 4, das mit der Analysevorrichtung 7 in Verbindung steht bzw. von dieser gesteuert wird - dargestellt durch die gestrichelt gezeichnete Leitung 9-, entsprechend eingestellt und so die Durchflußmenge des Oxidants in der Leitung 2 geregelt werden. Analog zu der Vorgehensweise bei der Analyse der Gaszusammensetzung kann auch diese Nachregelung kontinuierlich oder diskontinuierlich erfolgen.

Im Gegensatz zu der in der Figur dargestellten Verfahrensweise können selbstverständlich auch die Durchflußmenge in der Leitung 1 oder aber die Durchflußmengen in beiden Leitungen 1 und 2 geregelt werden, wodurch ein vorgewähltes Verhältnis der Komponenten automatisch eingestellt werden kann; welche der Verfahrensweisen gewählt wird, hängt von dem jeweiligen Spaltsystem ab.

Entsprechend einer vorteilhaften Ausgestaltung des erfindungsgemäßen Verfahrens zum Überwachen und Regeln einer Gaszusammensetzung können die Durchflußmengen des oder der Kohlenwasserstoffe und des Sauerstoffes und/oder des Sauerstoff-reichen Gasgemisches und/oder des Sauerstoff-haltigen Gasgemisches mittels geeigneter Meßvorrichtungen - die in der Figur als FIC-Meßvorrichtungen dargestellt sind - erfaßt und die Zufuhr der genannten Gase bzw. Gasgemische entsprechend geregelt werden.

Das erfindungsgemäße Verfahren sowie die erfindungsgemäße Vorrichtung ermöglichen einen sicheren Betrieb bei der Erzeugung einer als Schutz- und/oder Wärmebehandlungsgas verwendeten Gaszusammensetzung. Diese arbeitet unabhängig von Druckschwankungen im Versorgungssystem, sich ändemden Druckwiderständen in den Spalteinrichtungen sowie Verschmutzungen in Durchflußmeßgeräten, etc..

## Patentansprüche

1. Verfahren zum Überwachen und Regeln einer Gaszusammensetzung, insbesondere einer als Schutz- und/oder Wärmebehandlungsgas verwendeten Gaszusammensetzung, bestehend aus wenigstens einem Kohlenwasserstoff und Sauerstoff und/oder einem Sauerstoff-reichen Gasgemisch, die vor ihrer Verwendung gemischt werden, **dadurch gekennzeichnet**, daß die Gaszusammensetzung (5) nach ihrer Vermischung (3) und vor ihrer thermischen Umsetzung (6) analysiert (7, 8) und entsprechend der Analyse und der gewünschten Zusammensetzung des Gases die Zufuhr des oder der Kohlenwasserstoffe (1) und/oder die Zufuhr des Sauerstoffes und/oder des Sauerstoff-reichen Gasgemisches (2) und/oder des Sauerstoff-haltigen Gasgemisches (2) nachgeregelt wird (7, 9).

2. Verfahren zum Überwachen und Regeln einer Gaszusammensetzung nach Anspruch 1, dadurch gekennzeichnet, daß die Analyse (7, 8) der Gaszusammensetzung mittels wenigstens eines Infrarot-Sensors erfolgt.

3. Verfahren zum Überwachen und Regeln einer Gaszusammensetzung nach einem der vorhergehenden Ansprüche, dadurch gekennzeichnet, daß die Analyse (7, 8) der Gaszusammensetzung mittels wenigstens eines Sensors, der die paramagnetischen Eigenschaften des Gases erfaßt, erfolgt.

4. Verfahren zum Überwachen und Regeln einer Gaszusammensetzung nach einem der vorhergehenden Ansprüche, dadurch gekennzeichnet, daß die Analyse (7, 8) kontinuierlich oder diskontinuierlich erfolgt.

5. Verfahren zum Überwachen und Regeln einer Gaszusammensetzung nach einem der vorhergehenden Ansprüche, dadurch gekennzeichnet, daß die Nachregelung (7, 9) kontinuierlich oder diskontinuierlich erfolgt.

6. Verfahren zum Überwachen und Regeln einer Gaszusammensetzung nach einem der vorhergehenden Ansprüche, dadurch gekennzeichnet, daß die Durchflußmenge des oder der Kohlenwasserstoffe (1) und die Durchflußmenge des Sauerstoffes und/oder des Sauerstoff-reichen Gasgemisches (2) und/oder des Sauerstoffhaltigen Gasgemisches (2) mittels geeigneter Meßvorrichtungen (FIC) erfaßt und die Zufuhr der genannten Gase bzw. Gasgemische entsprechend geregelt wird.

7. Vorrichtung zum Überwachen und Regeln einer Gaszusammensetzung, insbesondere einer als Schutz- und/oder Wärmebehandlungsgas verwendeten Gaszusammensetzung, bei der wenigstens ein Kohlenwasserstoff und/oder Sauerstoff und/oder ein Sauerstoff-reiches Gasgemisch und/oder ein Sauerstoffhaltiges Gasgemisch vor ihrer Verwendung in wenigstens einer Mischvorrichtung zusammengeführt werden, **gekennzeichnet** durch eine Analysevorrichtung (7), die die Gaszusammensetzung (5) nach ihrer Vermischung und vor ihrer thermischen Umsetzung (6) erfaßt, und Mittel zum Regeln der Zufuhr des oder der Kohlenwasserstoffe und/oder der Zufuhr des Sauerstoffes und/oder des Sauerstoff-reichen Gasgemisches und/oder des Sauerstoff-haltigen Gasgemisches.

8. Vorrichtung zum Überwachen und Regeln einer Gaszusammensetzung nach Anspruch 7, dadurch gekennzeichnet, daß der Analysevorrichtung (7) wenigstens ein Infrarot-Sensor zugeordnet ist.

9. Vorrichtung zum Überwachen und Regeln einer Gaszusammensetzung nach Anspruch 7 oder 8, dadurch gekennzeichnet, daß der Analysevorrichtung (7) wenigstens ein Sensor, der die paramagnetischen Eigenschaften des Gases erfaßt, zugeordnet ist.

10. Vorrichtung zum Überwachen und Regeln einer Gaszusammensetzung nach einem der Ansprüche 7 bis 9, dadurch gekennzeichnet, daß die Mittel zum Regeln der Zufuhr des oder der Kohlenwasserstoffe und/oder der Zufuhr des Sauerstoffes und/oder des Sauerstoff-reichen Gasgemische und/oder des Sauerstoff-haltigen Gasgemisches als wenigstens ein Regelventil (4) ausgebildet sind.
